# EUROPEAN PATENT APPLICATION

(11) **EP 4 571 568 A1**
(43) Date of publication of application: **18.06.2025**
(21) Application number: 23852165.2
(22) Date of filing: 06.04.2023
(51) Int. Cl.: G06F 40/279, G06Q 10/0633

(54) **COMPUTER SYSTEM, AND METHOD FOR GENERATING STRUCTURED DATA WHICH REPRESENTS BUSINESS PROCESS**

(30) Priority: 09.08.2022 JP 2022126821
(71) Applicant: Hitachi, Ltd., Tokyo 100-8280 (JP)
(72) Inventor: TERUYA Eri, Tokyo 100-8280 (JP); TAKEUCHI Tadashi, Tokyo 100-8280 (JP); AGATSUMA Shotaro, Tokyo 100-8280 (JP)
(74) Representative: MERH-IP Matias Erny Reichl Hoffmann Patentanwälte PartG mbB
(86) International application number: PCT/JP2023/014180
(87) International publication number: WO 2024/034179

(57) **Abstract**

Provided is a computer system that extracts an entity from a document that describes a business process including a plurality of procedures, and that classifies a category of the entity. The computer system generates a plurality of entity groups each including one or more entities and corresponding to one procedure, and specifies for each of the entity groups, a main entity that is the entity, which characterizes a procedure corresponding to the entity group, based on a category of one or more of the entities included in the entity group. The computer system executes processing of determining an order of the plurality of procedures based on a relationship between main entities, determines an order of the plurality of procedures based on a result of the processing, and generates information related to the ordered entity groups as structured data of the business process.

## Description

### Cross-Reference to Related Application

The present application claims the priority of Japanese Patent Application No. 2022-126821 filed on August 9, 2022, the entire contents of which are incorporated herein by reference.

### Technical Field

The present invention relates to a process information structuring system and a process information structuring method.

### Background Art

In recent years, in various fields, there is an increasing need to use AI to support, streamline, and optimize a business process including a plurality of procedures. For example, in an industrial field, AI was put into practical use to recommend an operation procedure for a device and recommend a process for a device failure, in a medical filed, AI was put into practical use to assist with diagnosis, treatment, and medication, and in a material field, AI was put into practical use to recommend a synthesis process for a new material.

In order to support a business process using AI, it is generally necessary to prepare data capable of processing business process information. However, since information related to a business process is often stored as a document written in a natural language (a device maintenance report, a medical chart, an experiment report, or the like), it is difficult to process the information as is. Therefore, it is necessary to convert information described in a document into structured data that can be processed.

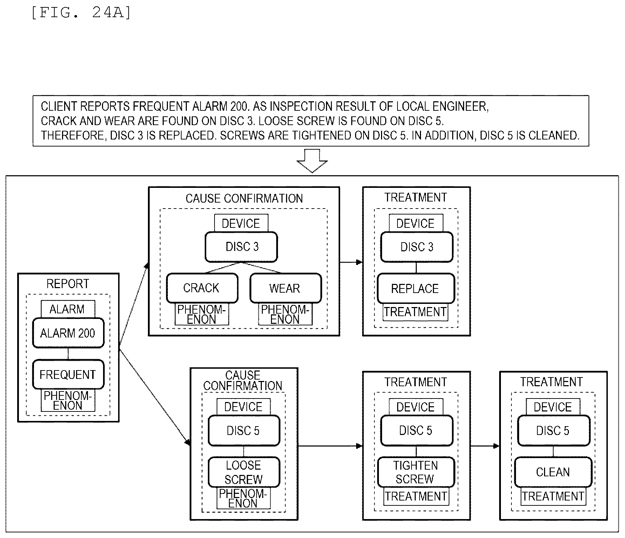

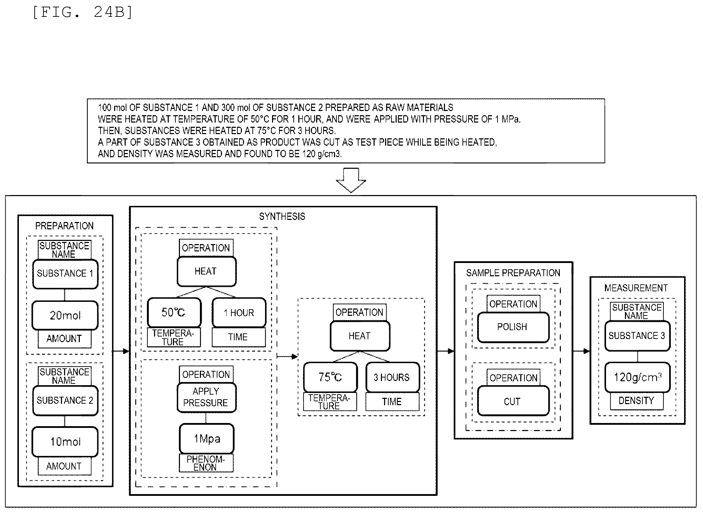

FIGS. 24A and 24B are diagrams showing images of structuring business processes. FIG. 24A shows an image of structuring a business process related to maintenance, and FIG. 24B shows an image of structuring a business process related to substance manufacturing.

An enormous amount of time and specialized knowledge are required to manually generate structured data from a document. Therefore, a technique for automatically generating structured data from a document is desired. In response to this, there are techniques disclosed in PTL 1, NPL 1, and NPL 2.

PTL 1 discloses a document understanding support device "including a word extraction condition learning unit, a word extraction unit, a word relationship extraction condition learning unit, a word relationship extraction unit, and an output unit". Further, PTL 1 discloses that "the word extraction condition learning unit generates a word extraction condition for extracting a word from a support electronic document by learning based on a feature value given to each word", "the word extraction unit extracts a word satisfying the word extraction condition", "the word relationship extraction condition learning unit generates a word relationship extraction condition for extracting a relationship word from the support electronic document by learning based on a feature value for a word relationship to be extracted", and "the word relationship extraction unit extracts a word relationship satisfying the word relationship extraction condition".

NPL 1 and NPL 2 disclose techniques of outputting structured data of a cooking recipe from a document that describes the cooking recipe. In the techniques disclosed in NPL 1 and NPL 2, the structured data of the cooking recipe is generated using a rule related to dependency between an ingredient and a cooking method.

### Citation List

### Patent Literature

PTL 1: JP2019-79321A

### Non Patent Literature

NPL 1: structure analysis of cooking recipe texts and application thereof, proceedings of the 18th annual conference of the association for natural language processing, pp. 839-842
NPL 2: structuring cooking procedures in cooking textbook, IEICE Transactions D, Vol. J85-D2, No. 1, pp. 79-89

### Summary of Invention

### Technical Problem

The technique disclosed in PTL 1 requires a large amount of learning data in order to ensure accuracy. Therefore, it is difficult to apply the technique to a field with little learning data. In the techniques disclosed in NPL 1 and NPL 2, it is necessary to set a precise rule.

The invention has been made in view of the above problems, and an object of the invention is to provide a system and a method for accurately generating structured data from a document in which a business process is described, without using a precise rule.

### Solution to Problem

A representative example of the invention disclosed in the present application is as follows. That is, a computer system includes at least one computer, and the at least one computer is configured to
receive an input of a document that describes a business process including a plurality of procedures,
extract, as an entity, an expression related to the business process from the document,
classify a category of the entity,
generate a plurality of entity groups each including one or more of the entities and corresponding to one of the procedures,
specify, for each of the entity groups, a main entity that is the entity, which characterizes the procedure corresponding to the entity group, based on a category of one or more of the entities included in the entity group,
execute first order determination processing of determining an order of the plurality of procedures based on a relationship between the main entities,
determine an order of the plurality of procedures based on a result of the first order determination processing, and
generate information related to the ordered entity groups as structured data of the business process and outputting the structured data.

### Advantageous Effects of Invention

According to the invention, structured data can be accurately generated from a document in which a business process is described without using a precise rule. Problems, configurations, and effects other than those described above will be clarified by description of the following embodiments.

### Brief Description of Drawings

[FIG. 1] FIG. 1 is a diagram showing an example of a first system according to Embodiment 1.
[FIG. 2] FIG. 2 is a diagram showing an example of a hardware structure of a computer according to Embodiment 1.
[FIG. 3] FIG. 3 is a diagram showing an example of a document database according to Embodiment 1.
[FIG. 4] FIG. 4 is a diagram showing an example of an entity and category dictionary stored in a structured rule database according to Embodiment 1.
[FIG. 5] FIG. 5 is a diagram showing an example of procedure category determination rule information stored in the structured rule database according to Embodiment 1.
[FIG. 6] FIG. 6 is a diagram showing an example of main entity determination rule information stored in the structured rule database according to Embodiment 1.
[FIG. 7] FIG. 7 is a diagram showing an example of parallelism determination rule information stored in the structured rule database according to Embodiment 1.
[FIG. 8] FIG. 8 is a diagram showing an example of business process order determination rule information stored in the structured rule database according to Embodiment 1.
[FIG. 9] FIG. 9 is a diagram showing an example of procedure order determination rule information stored in the structured rule database according to Embodiment 1.
[FIG. 10] FIG. 10 is a diagram showing an example of relationship definition information stored in the structured rule database according to Embodiment 1.
[FIG. 11] FIG. 11 is a flowchart showing an outline of structured data generation processing executed by a structuring processing device according to Embodiment 1.
[FIG. 12] FIG. 12 is a diagram showing an example of information generated by the structuring processing device according to Embodiment 1.
[FIG. 13] FIG. 13 is a diagram showing an example of information generated by the structuring processing device according to Embodiment 1.
[FIG. 14] FIG. 14 is a diagram showing an example of information generated by the structuring processing device according to Embodiment 1.
[FIG. 15] FIG. 15 is a diagram showing an example of information generated by the structuring processing device according to Embodiment 1.
[FIG. 16] FIG. 16 is a diagram showing an example of information generated by the structuring processing device according to Embodiment 1.
[FIG. 17] FIG. 17 is a diagram showing an example of information generated by the structuring processing device according to Embodiment 1.
[FIG. 18] FIG. 18 is a diagram showing an example of structured data generated by the structuring processing device according to Embodiment 1.
[FIG. 19A] FIG. 19A is a diagram showing an example of structured data displayed on a user terminal according to Embodiment 1.
[FIG. 19B] FIG. 19B is a diagram showing an example of structured data displayed on the user terminal according to Embodiment 1.
[FIG. 20] FIG. 20 is a flowchart showing an example of procedure category determination processing executed by the structuring processing device according to Embodiment 1.
[FIG. 21] FIG. 21 is a flowchart showing an example of main entity determination processing executed by the structuring processing device of Embodiment 1.
[FIG. 22] FIG. 22 is a flowchart showing an example of parallelism determination processing executed by the structuring processing device according to Embodiment 1.
[FIG. 23] FIG. 23 is a flowchart showing an example of procedure order determination processing executed by the structuring processing device according to Embodiment 1.
[FIG. 24A] FIG. 24A is a diagram showing an image of structuring a business process.
[FIG. 24B] FIG. 24B is a diagram showing an image of structuring a business process.

### Description of Embodiments

Hereinafter, embodiments will be described with reference to the drawings. Hereinafter, embodiments according to the invention will be described with reference to the drawings. The following description and drawings are examples for describing the invention, and are omitted and simplified as appropriate for clarity of description. The invention can be implemented in various other forms. Unless otherwise specified, each component may be single or plural.

In the following description, the same or similar components are denoted by the same reference numerals, and redundant description thereof may be omitted. In the following description, a letter "S" attached before a reference numeral refers to a processing step. In the following description, various types of information may be described by expressions such as "table" and "information", but the various types of information may be expressed by other data structures.

Further, although an example is described in the following description in which information related to a material synthesis process described in an experiment report is structured, a structuring target can be applied to various fields, objects, and use cases described in the background art.

### [Embodiment 1]

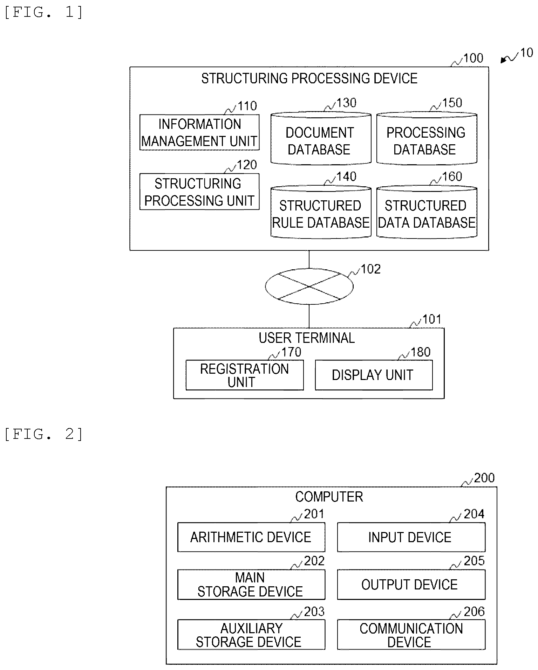

FIG. 1 is a diagram showing an example of a first system according to Embodiment 1. FIG. 2 is a diagram showing an example of a hardware structure of a computer 200 according to Embodiment 1.

A system 10 shown in FIG. 1 includes a structuring processing device 100 and a user terminal 101. The structuring processing device 100 and the user terminal 101 are connected via a communication network 102 in a state in which two-way communication is possible. The communication network 102 is, for example, a local area network (LAN), a wide area network (WAN), the Internet, a public communication network, or a dedicated line. The number of user terminals 101 may be two or more. In the following description, the system 10 is also referred to as a structuring system 10.

The structuring processing device 100 and the user terminal 101 each include, for example, the computer 200 as shown in FIG. 2. The computer 200 includes an arithmetic device 201, a main storage device 202, an auxiliary storage device 203, an input device 204, an output device 205, and a communication device 206.

The arithmetic device 201 executes a program stored in the main storage device 202. The arithmetic device 201 is, for example, a central processing unit (CPU), a micro processing unit (MPU), a graphics processing unit (GPU), a field programmable gate array (FPGA), an application specific integrated circuit (ASIC), or an artificial intelligence (AI) chip. The arithmetic device 201 executes processing according to the program to be operated as a functional unit (module) for implementing a specific function. In the following description, when the processing is described with the functional unit as a subject, it indicates that the arithmetic device 201 executes a program for implementing the functional unit.

The main storage device 202 stores a program and data to be executed by the arithmetic device 201. The main storage device 202 is, for example, a non volatile memory such as a read only memory (ROM), a random access memory (RAM), and a non volatile RAM (NVRAM). Further, the main storage device 202 is also used as a work area.

The auxiliary storage device 203 permanently stores data. The auxiliary storage device 203 is, for example, a solid state drive (SSD) or a hard disk drive. The computer 200 may not include the auxiliary storage device 203. In this case, a program and data may be acquired from an optical storage device such as a compact disc (CD) or a digital versatile disc (DVD), an IC card, and an SD card, or may be acquired from a storage area on an externally connected storage system or a cloud system. The program and data stored in the auxiliary storage device 203 are read by the arithmetic device 201 and loaded into the main storage device 202.

The input device 204 is an interface that receives an external input. The input device 204 is, for example, a keyboard, a mouse, a touch panel, a card reader, a pen input tablet, or an audio input device.

The output device 205 is an interface that outputs various types of information such as a processing progress and a processing result. The output device 205 is, for example, a display device such as a liquid crystal monitor and a liquid crystal display (LCD), an audio output device, or a printer.

The computer 200 may not include the input device 204 and the output device 205. In this case, the computer 200 inputs and outputs information via the communication device 206.

The communication device 206 communicates with another device. The communication device 206 is, for example, a network interface (NIC), a wireless communication module, or a USB module.

The structuring processing device 100 generates structured data from document data including texts in which a business process is described in a natural language.

Here, the business process includes a plurality of procedures. The structured data is data for grasping a structure of the plurality of procedures, and examples of the structured data include Json format data, XML format data, RDF format data, and Graph ML format data. The invention is not limited by a data format of the structured data. The structured data in Embodiment 1 is Graph ML format data.

Hereinafter, one or more sentences or a group of one or more sentences that describe a business process are referred to as a document. In the following description, processing is executed in units of document, but the unit of processing is not limited.

The structuring processing device 100 includes an information management unit 110 and a structuring processing unit 120, and further includes a document database 130, a structured rule database 140, a processing database 150, and a structured data database 160.

The document database 130 is a database that stores a document to be processed. The structured rule database 140 is a database that stores a rule used in structuring processing. The processing database 150 is a database that stores a processing result of the structuring processing. The structured data database 160 is a database that stores structured data generated by the structuring processing.

The information management unit 110 manages a document, a rule, structured data, and the like. The structuring processing unit 120 executes structuring processing. The information management unit 110 and the structuring processing unit 120 may be implemented as one function of middleware or the like that manages an operating system, a file system, a relational database, and NoSQL such as Key-Value Store (KVS).

The structuring processing unit 120 executes the following processing in the structuring processing.

(1) The structuring processing unit 120 extracts, as an entity, an expression such as a word related to a procedure of a business process from texts included in a document, and classifies a category for the extracted entity (entity category).
(2) The structuring processing unit 120 generates an entity group by grouping entities related to one procedure.
(3) The structuring processing unit 120 classifies a category (procedure category) for a procedure corresponding to the entity group based on an entity category of an entity included in the entity group.
(4) The structuring processing unit 120 specifies an entity (main entity) representing characteristics of a procedure corresponding to an entity group among entities included in the entity group.
(5) The structuring processing unit 120 determines procedures to be executed in parallel among procedures included in the business process based on a relationship between main entities.
(6) The structuring processing unit 120 determines an order of procedures based on the relationship between the main entities, an order of procedures, and a relationship between procedure categories.
(7) The structuring processing unit 120 confirms consistency of determination results in (5) and (6) and records a confirmation result.
(8) The structuring processing unit 120 generates structured data based on the determination results in (5) and (6) and the confirmation result of consistency.
(9) The structuring processing unit 120 generates display information for displaying the structured data and transmits the display information to the user terminal 101.

The user terminal 101 includes a registration unit 170 that displays a screen for registering a document and various rules, and a display unit 180 that displays a screen for presenting and correcting the structured data.

Functions of the structuring processing device 100 may be implemented using a computer system including a plurality of the computers 200. All or some of the functions of the structuring processing device 100 may be implemented using a virtualization technique. For example, a method may be considered in which all or some of the functions of the structuring processing device 100 are implemented by using a cloud service such as software as a service (SaaS), platform as a service (PaaS), or an infrastructure as a service (IaaS).

The structuring processing device 100 and the user terminal 101 may be integrated into one device.

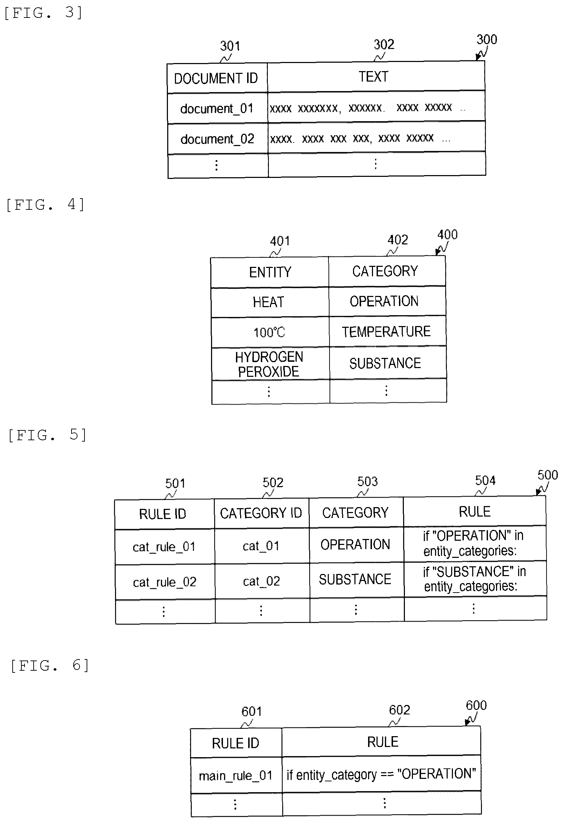

FIG. 3 is a diagram showing an example of the document database 130 according to Embodiment 1.

The document database 130 stores entries including a document ID 301 and a text 302. One entry is stored for one document. A field included in the entry is an example, and the entry is not limited to such an example.

The document ID 301 is a field for storing identification information of a document. The text 302 is a field for storing texts included in a document. A data format of the texts stored in the text 302 is not limited.

FIG. 4 is a diagram showing an example of an entity and category dictionary 400 stored in the structured rule database 140 according to Embodiment 1.

The entity and category dictionary 400 is information for managing an expression such as a word extracted as an entity and an entity category (type). The entity and category dictionary 400 stores entries including an entity 401 and a category 402. One entry is stored for one expression (entity). A field included in the entry is an example, and the entry is not limited to such an example.

The entity 401 is a field for storing an expression to be extracted. The category 402 is a field for storing an entity category of an expression.

FIG. 5 is a diagram showing an example of procedure category determination rule information 500 stored in the structured rule database 140 according to Embodiment 1.

The procedure category determination rule information 500 is information for managing a determination rule of a procedure category of a procedure corresponding to an entity group. The procedure category determination rule information 500 stores entries including a rule ID 501, a category ID 502, a category 503, and a rule 504. One entry is stored for one rule. A field included in the entry is an example, and the entry is not limited to such an example.

The rule ID 501 is a field for storing identification information of a rule. The category ID 502 is a field for storing identification information of a procedure category of a procedure that matches a rule. The category 503 is a field for storing a procedure category of a procedure that matches a rule. The rule 504 is a field for storing a determination rule of a procedure category.

Here, the procedure category is a type of a procedure. In a business process related to substance manufacturing, procedure categories such as "preparation", "operation", and "measurement" are considered, and in a business process related to maintenance, procedure categories such as "report", "cause confirmation", and "treatment" are considered.

A rule using an entity category of an entity included in an entity group is considered as a determination rule of a procedure category. For example, there is a rule for determining, as "substance", a procedure category of an entity group including an entity whose entity category is "substance". In addition, there may be a rule for determining a procedure category based on a combination of categories of entities included in an entity group. For example, in a business process related to maintenance in FIG. 24A, there is a rule for determining, as "report", a procedure category of an entity group including entities whose entity categories are "alarm" and "phenomenon". The rules described above are merely examples, and the invention is not limited thereto.

A first entry in FIG. 5 defines a rule for determining a procedure category as "operation" if "operation" is included in a variable "entity_categories" representing an entity category in each entry included in an entity group. A second entry in FIG. 5 defines a rule for determining a procedure category as "substance" if "substance" is included in the variable "entity_categories".

FIG. 6 is a diagram showing an example of main entity determination rule information 600 stored in the structured rule database 140 according to Embodiment 1.

The main entity determination rule information 600 is information for managing a rule (main entity determination rule) for specifying a main entity from entities included in an entity group. The main entity determination rule information 600 stores entries including a rule ID 601 and a rule 602. One entry is stored for one rule. A field included in the entry is an example, and the entry is not limited to such an example.

The rule ID 601 is a field for storing identification information of a rule. The rule 602 is a field for storing a main entity determination rule.

A rule using an entity category is considered as a main entity determination rule. For example, there is a rule for specifying an entity whose entity category is "substance" as a main entity. The rules described above are merely examples, and the invention is not limited thereto.

A first entry in FIG. 6 defines a rule for specifying, as a main entity, an entity whose variable "entity_category" representing an entity category is "operation".

The structured rule database 140 may include information for managing a rule for specifying a sub-entity having a relationship of complementing a main entity.

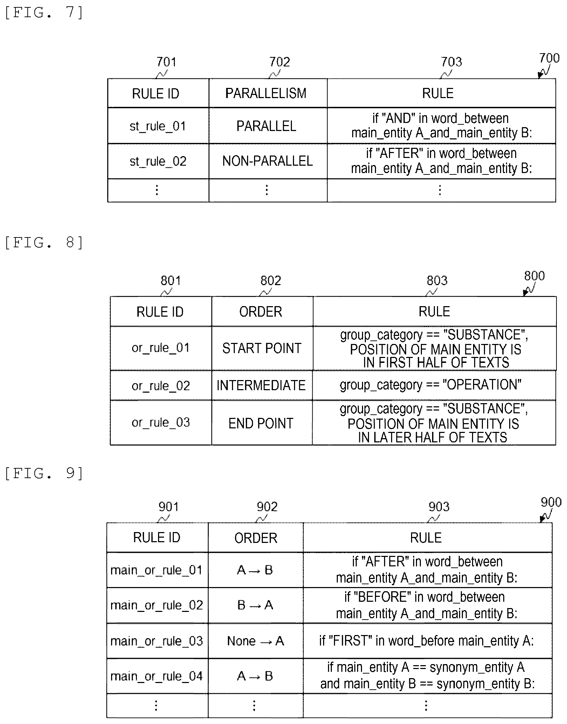

FIG. 7 is a diagram showing an example of parallelism determination rule information 700 stored in the structured rule database 140 according to Embodiment 1.

The parallelism determination rule information 700 is information for managing a rule (parallelism determination rule) for determining whether two procedures are executed in parallel. The parallelism determination rule information 700 stores entries including a rule ID 701, parallelism 702, and a rule 703. One entry is stored for one rule. A field included in the entry is an example, and the entry is not limited to such an example.

The rule ID 701 is a field for storing identification information of a rule. The parallelism 702 is a field for storing a value indicating whether two procedures are executed in parallel. The rule 703 is a field for storing a parallelism determination rule.

A rule using a word included in a sentence connecting main entities of two entity groups is considered as the parallelism determination rule. The rule described above is merely an example, and the invention is not limited thereto.

A first entry in FIG. 7 defines a rule for determining that a procedure corresponding to an entity group including a main entity A and a procedure corresponding to an entity group including a main entity B are executed in parallel if "however" is included in a variable "word_between_main entity A_and_main_entity B" representing a word included in a sentence connecting the main entity A and the main entity B". A second entry in FIG. 7 defines a rule for determining that the procedure corresponding to the entity group including the main entity A and the procedure corresponding to the entity group including the main entity B are not executed in parallel if "after" is included in the variable "wordbetween main_entity A_and_main_entity B".

FIG. 8 is a diagram showing an example of business process order determination rule information 800 stored in the structured rule database 140 according to Embodiment 1.

The business process order determination rule information 800 is information for managing a rule (business process order determination rule) for determining a procedure order based on a procedure category. The business process order determination rule information 800 stores entries including a rule ID 801, an order 802, and a rule 803. One entry is stored for one rule. A field included in the entry is an example, and the entry is not limited to such an example.

The rule ID 801 is a field for storing identification information of a rule. The order 802 is a field for storing information indicating a rough order of procedures. "Start point" indicates a first procedure of the entire business process, "intermediate" indicates an intermediate procedure of the entire business process, and "end point" indicates a last procedure of the entire business process. The rule 803 is a field for storing a business process order determination rule.

A rule using only a procedure category is considered as the business process order determination rule. A method for defining a procedure pattern described above is an example, and the invention is not limited thereto. For example, a rule using a procedure category and a position of a main entity may be used.

Depending on a business process, it may be common to generate structured data in which procedures are arranged in a predetermined order. For example, in the business process related to maintenance shown in FIG. 24A, procedures are generally arranged in an order of "report", "cause confirmation", and "treatment". Here, the order of the procedures in the structured data is defined in advance.

A first entry in FIG. 8 defines a rule for determining that a procedure is a first procedure of the entire business process if a procedure category is "substance" and a main entity is in the first half of texts. A second entry in FIG. 8 defines a rule for determining that a procedure is an intermediate procedure of the entire business process if a procedure category is "operation". A third entry in FIG. 8 defines a rule for determining that a procedure is a procedure in later half of the entire business process if a procedure category is "substance" and a main entity is in later half of texts.

FIG. 9 is a diagram showing an example of procedure order determination rule information 900 stored in the structured rule database 140 according to Embodiment 1.

The procedure order determination rule information 900 is information for managing a rule (procedure order determination rule) for determining an order between two procedures based on a relationship between main entities. The procedure order determination rule information 900 stores entries including a rule ID 901, an order 902, and a rule 903. One entry is stored for one rule. A field included in the entry is an example, and the entry is not limited to such an example.

The rule ID 901 is a field for storing identification information of a rule. The order 902 is a field for storing an order relationship between entities. The rule 903 is a field for storing a procedure order determination rule.

A rule using a word included in a sentence connecting main entities is considered as the procedure order determination rule. A rule may be based on entities having a synonymous relationship. For example, when "third disk" and "disk 3" are related synonyms, there may be a rule for arranging an entity group including the "third disk" and an entity group including the "disk 3" in the order of appearance. In addition to the synonymous relationship, a relationship of device configuration state (in a module in the same device), a relationship of substance, and the like may be used. The rules described above are merely examples, and the invention is not limited thereto.

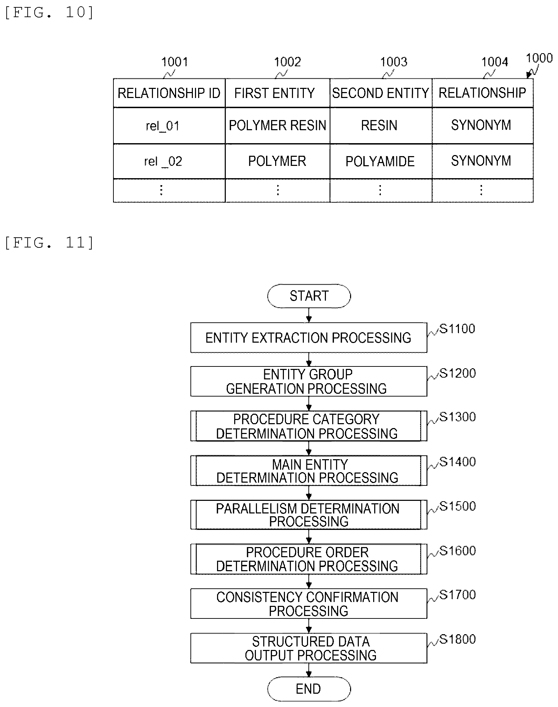

A first entry in FIG. 9 defines a rule for arranging an entity group including a main entity A before an entity group including a main entity B if "after" is included in a variable "word_beetween main_entity A_and_main_entity B" representing a word included in a sentence connecting the main entity A and the main entity B. A second entry in FIG. 9 defines a rule for arranging the entity group including the main entity B before the entity group including the main entity A if "before" is included in the variable "word_between main_entity A_and_main_entity B". A third entry in FIG. 9 defines a rule for arranging the entity group including the main entity A at the first in the business process if "first" is included in a variable "main_before main_entity A" representing a word immediately before the main entity A. A fourth entry in FIG. 9 defines a rule for arranging the entity group including the main entity A before the entity group including the main entity B if a term indicating a specific relationship is included in a variable "main_entity A" representing the main entity and a variable "main_entity B" representing the main entity B. The specific relationship is defined in relationship definition information 1000 (see FIG. 10) to be described later.

FIG. 10 is a diagram showing an example of the relationship definition information 1000 stored in the structured rule database 140 according to Embodiment 1.

The relationship definition information 1000 is information for managing a specific relationship (for example, a similarity relationship) between entities. The relationship definition information 1000 stores entries including a relationship ID 1001, a first entity 1002, a second entity 1003, and a relationship 1004. One entry is stored for one relationship between entities. A field included in the entry is an example, and the entry is not limited to such an example.

The relationship ID 1001 is a field for storing identification information of a relationship. The first entity 1002 and the second entity 1003 are fields for storing entities. The relationship 1004 is a field for storing a relationship between the first entity and the second entity.

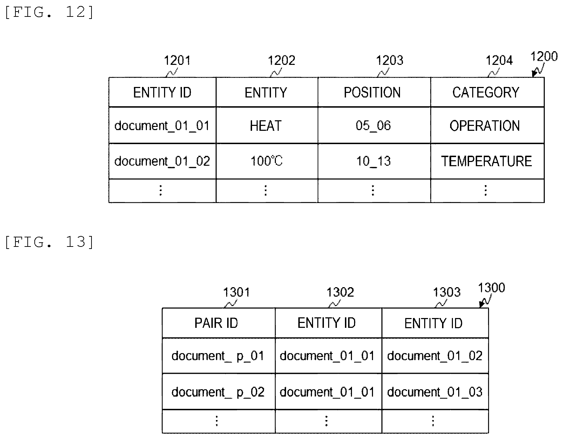

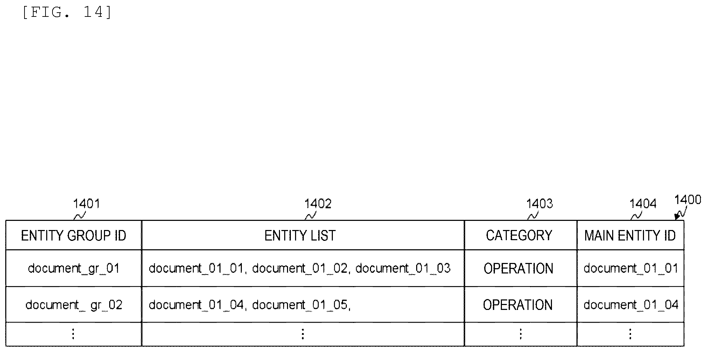

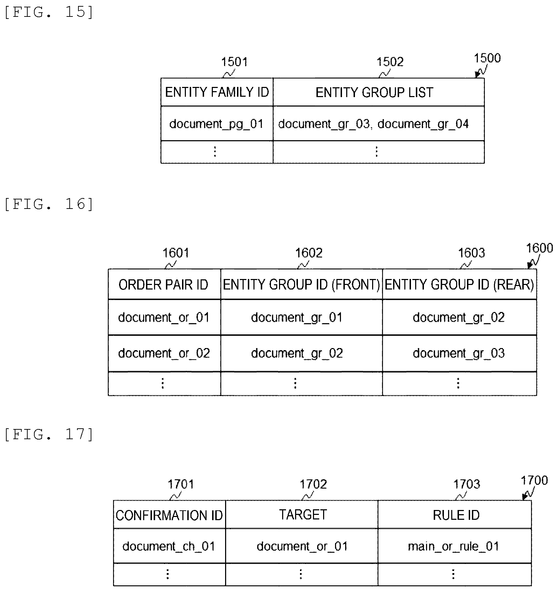

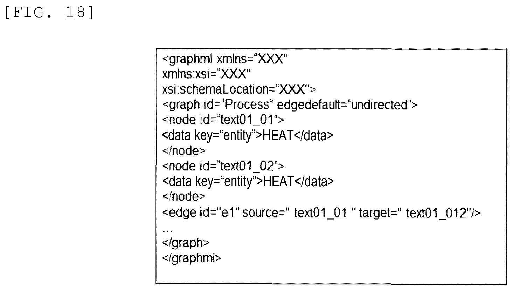

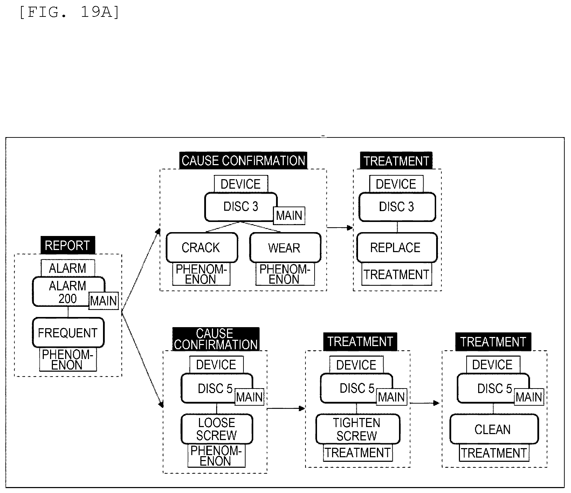

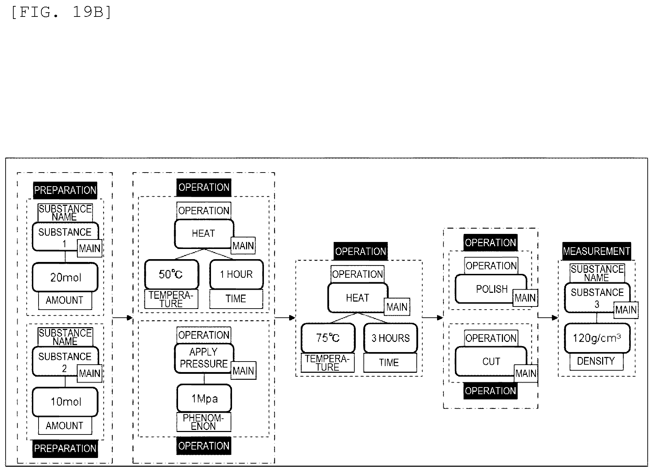

FIG. 11 is a flowchart showing an outline of structured data generation processing executed by the structuring processing device 100 according to Embodiment 1. FIGS. 12, 13, 14, 15, 16, and 17 are diagrams showing examples of information generated by the structuring processing device 100 according to Embodiment 1. FIG. 18 is a diagram showing an example of structured data generated by the structuring processing device 100 according to Embodiment 1. FIGS. 19A and 19B are diagrams showing examples of structured data displayed on the user terminal 101 according to Embodiment 1.

Upon detecting an execution trigger, the structuring processing device 100 starts the structured data generation processing. The execution trigger is, for example, reception of an execution instruction and detection of an execution timing. In the following description, an example will be described in which processing is executed when receiving an execution instruction including identification information of a document for which one piece of structured data is to be generated.

The structuring processing unit 120 acquires texts of a designated document from the document database 130, and executes entity extraction processing using the texts and the entity and category dictionary 400 (step S1100). The structuring processing unit 120 stores extracted entity information as entity information 1200 in the processing database 150.

The entity information 1200 stores entries including an entity ID 1201, an entity 1202, a position 1203, and a category 1204. One entry is stored for one entity. A field included in the entry is an example, and the entry is not limited to such an example.

The entity ID 1201 is a field for storing identification information of an entity assigned by the structuring processing unit 120. The entity 1202 is a field for storing an expression extracted as an entity. The position 1203 is a field for storing a position of an entity in the texts. The category 1204 is a field for storing a category of an entity.

In the entity extraction processing, the structuring processing unit 120 extracts an entity based on the entity and category dictionary 400, and generates the entity information 1200 based on an extraction result. A method for extracting an entity is not limited to a rule-based method. An existing unique expression extraction technique such as machine learning can be used.

Next, the structuring processing unit 120 executes entity group generation processing using the extracted entity and the texts (step S1200). Specifically, the following processing is executed.

(S1200-1) The structuring processing unit 120 executes document structure analysis processing on the texts, and acquires entity dependency information. The structuring processing unit 120 generates a pair of entities having a correspondence relationship based on the entity dependency information. The pair of entities may be generated using a model obtained by learning the correspondence relationship between the entities. The structuring processing unit 120 stores the generated pair information as entity pair information 1300 in the processing database 150.

The entity pair information 1300 stores entries including a pair ID 1301, an entity ID 1302, and an entity ID 1303. One entry is stored for one entity pair. A field included in the entry is an example, and the entry is not limited to such an example.

The pair ID 1301 is a field for storing identification information of an entity pair. The entity ID 1302 and the entity ID 1303 are fields for storing identification information of entities constituting a pair.

(S1200-2) The structuring processing unit 120 refers to the entity pair information 1300, and generates an entity group by grouping entities linked by the correspondence relationship. The structuring processing unit 120 stores the generated entity group information as entity group information 1400 in the processing database 150.

The entity group information 1400 stores entries including an entity group ID 1401, an entity list 1402, a category 1403, and a main entity ID 1404. One entry is stored for one entity group. A field included in the entry is an example, and the entry is not limited to such an example.

The entity group ID 1401 is a field for storing identification information of an entity group. The entity list 1402 is a field for storing a list of identification information of entities constituting the entity group. The category 1403 is a field for storing a procedure category. The main entity ID 1404 is a field for storing identification information of a main entity of the entity group. At this time, the category 1403 and the main entity ID 1404 of each entry are blank.

Th entity group generation processing is described above.

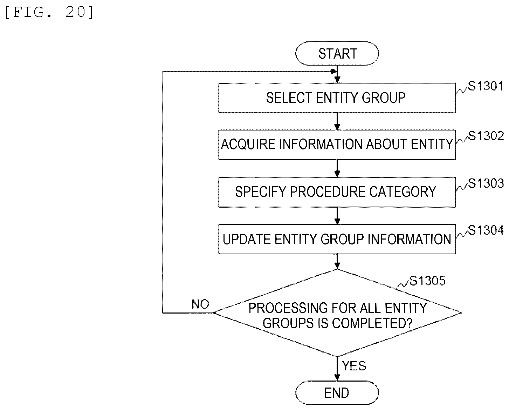

Next, the structuring processing unit 120 executes procedure category determination processing using the procedure category determination rule information 500 (step S1300). Details of the procedure category determination processing will be described with reference to FIG. 20. A result of the procedure category determination processing is reflected in the category 1403 of each entry in the entity group information 1400.

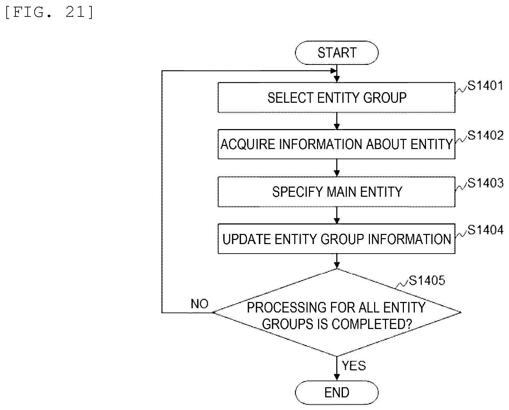

Next, the structuring processing unit 120 executes main entity determination processing using the main entity determination rule information 600 (step S1400). Details of the main entity determination processing will be described with reference to FIG. 21. A result of the main entity determination processing is reflected in the main entity ID 1404 of each entry in the entity group information 1400.

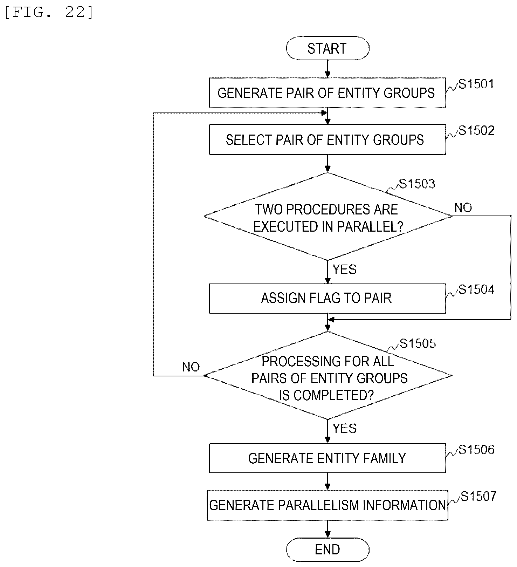

Next, the structuring processing unit 120 executes parallelism determination processing using the parallelism determination rule information 700 (step S1500). Details of the parallelism determination processing will be described with reference to FIG. 22. A result of the parallelism determination processing is stored as parallelism information 1500 in the processing database 150.

The parallelism information 1500 stores entries including an entity family ID 1501 and an entity group list 1502. One entry is stored for a group of entity groups executed in parallel. In the following description, a group of entity groups executed in parallel is described as an entity family. A field included in the entry is an example, and the entry is not limited to such an example.

The entity family ID 1501 is a field for storing identification information of an entity family. The entity group list 1502 is a field for storing identification information of entity groups constituting the entity family.

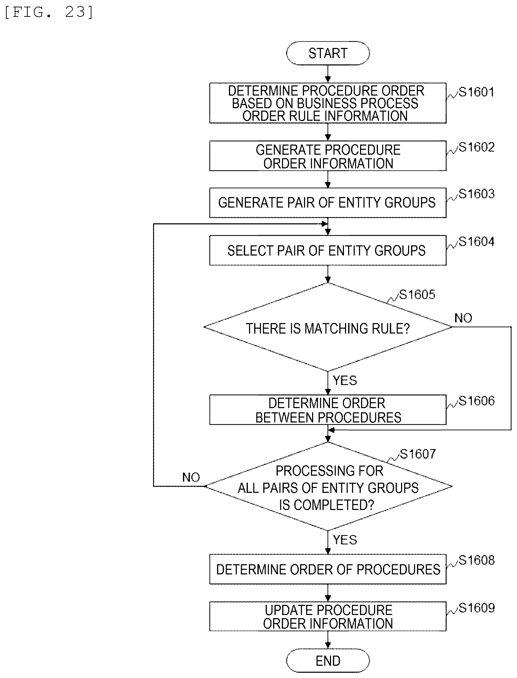

Next, the structuring processing unit 120 executes procedure order determination processing using the business process order determination rule information 800, the procedure order determination rule information 900, and the relationship definition information 1000 (step S1600). Details of the procedure order determination processing will be described with reference to FIG. 23. A result of the procedure order determination processing is stored as procedure order information 1600 in the processing database 150.

The procedure order information 1600 stores entries including an order pair ID 1601, an entity group ID (front) 1602, and an entity group ID (rear) 1603. One entry is stored for a pair of entity groups corresponding to procedures for defining an order relationship. A field included in the entry is an example, and the entry is not limited to such an example.

In Embodiment 1, a procedure order is expressed as a direction of an edge connecting nodes (entity groups) in a Graph ML format. A method for expressing the procedure order is not limited.

The order pair ID 1601 is a field for storing identification information of a pair of entity groups for defining an order relationship. The entity group ID (front) 1602 is a field for storing identification information of an entity group at a front end. The entity group ID (rear) 1603 is a field for storing identification information of an entity group at a rear end.

Next, the structuring processing unit 120 executes consistency confirmation processing using the parallelism determination rule information 700, the business process order determination rule information 800, the procedure order determination rule information 900, and the relationship definition information 1000 (step S1700). The consistency confirmation processing may not be executed.

Specifically, the structuring processing unit 120 determines whether information registered in the entity information 1200, the parallelism information 1500, and the procedure order information 1600 is consistent according to a rule defined using the parallelism determination rule information 700, the business process order determination rule information 800, the procedure order determination rule information 900, and the relationship definition information 1000. When there is inconsistent information, the structuring processing unit 120 stores the information as consistency confirmation information 1700 in the processing database 150.

The consistency confirmation information 1700 stores entries including a confirmation ID 1701, a target 1702, and a rule ID 1703. One entry is stored for one violation. A field included in the entry is an example, and the entry is not limited to such an example.

The confirmation ID 1701 is a field for storing identification information of an entry. The target 1702 is a field for storing identification information indicating a target of violation. For example, identification information of an order pair and an entity family is stored in the target 1702. The rule ID 1703 is a field for storing identification information of a rule against which a target violates.

Next, the structuring processing unit 120 executes structured data output processing using the entity information 1200, the entity pair information 1300, the entity group information 1400, the parallelism information 1500, the procedure order information 1600, and the consistency confirmation information 1700 (step S1800). Specifically, the structuring processing unit 120 generates, as the structured data, data representing a graph with entity groups serving as nodes, and stores the generated structured data in the structured data database 160. The structured data is, for example, data in a Graph ML format as shown in FIG. 18. Entity groups corresponding to procedures executed in parallel may be integrated into one node.

The structured data shown in FIG. 18 includes an entry that defines a node (entity group) of a graph, an entry that defines a main entity of an entity group, an entry that defines a connection relationship between nodes, and the like.

The display unit 180 of the user terminal 101 displays screens as shown in FIGS. 19A and 19B using the structured data. Dotted boxes represent entity groups. An icon representing a procedure category is displayed in an entity group. Icons representing an entity category and a main entity are displayed in a box representing an entity. A dash-dotted box is a group of procedures (entity groups) executed in parallel.

The structuring processing unit 120 determines parallelism of entity groups as well as a simple order between the entity groups, and generates structured data. Accordingly, a business process including procedures executed in parallel can be accurately structured. The structuring processing unit 120 determines a procedure order using a rule based on a main entity and a rule based on a procedure category. In this manner, a business process can be structured with high accuracy using a small number of rules. The rule based on the procedure category is not necessarily required.

FIG. 20 is a flowchart showing an example of the procedure category determination processing executed by the structuring processing device 100 according to Embodiment 1.

The structuring processing unit 120 selects an entity group (step S1301). Specifically, the structuring processing unit 120 selects one entry from the entity group information 1400.

The structuring processing unit 120 acquires information on each entity included in the entity group (step S1302). Specifically, the structuring processing unit 120 acquires an entity category from the entity information 1200 based on identification information registered in the entity list 1402 in the entry.

The structuring processing unit 120 specifies a procedure category based on an entity category of each entity included in the entity group and the procedure category determination rule information 500 (step S1303). Specifically, the structuring processing unit 120 determines a rule set in the rule 504 of each entry, and acquires a value of the category 503 of the entry corresponding to the matched rule.

The structuring processing unit 120 updates the entity group information 1400 (step S1304). Specifically, the structuring processing unit 120 sets the specified procedure category in the category 1403 of the entry selected in step S1301.

The structuring processing unit 120 determines whether the processing is completed for all entries of the entity group information 1400 (step S1305).

When the processing is not completed for all entries of the entity group information 1400, the structuring processing unit 120 returns the processing to S1301. When the processing is completed for all entries of the entity group information 1400, the structuring processing unit 120 ends the procedure category determination processing.

FIG. 21 is a flowchart showing an example of the main entity determination processing executed by the structuring processing device 100 according to Embodiment 1.

The structuring processing unit 120 selects an entity group (step S1401). Specifically, the structuring processing unit 120 selects one entry from the entity group information 1400.

The structuring processing unit 120 acquires information of each entity included in the entity group (step S1402). Specifically, the structuring processing unit 120 acquires an entity category from the entity information 1200 based on identification information registered in the entity list 1402 in the entry.

The structuring processing unit 120 specifies an entity that is to be a main entity based on the entity category of each entity included in the entity group and the main entity determination rule information 600 (step S1403). Specifically, the structuring processing unit 120 determines a rule set in the rule 602 of each entry, and specifies an entity matching the rule.

The structuring processing unit 120 updates the entity group information 1400 (step S1404). Specifically, the structuring processing unit 120 sets identification information of the entity specified as the main entity in the main entity ID 1404 of the entry selected in step S1401.

The structuring processing unit 120 determines whether the processing is completed for all entries of the entity group information 1400 (step S1405).

When the processing is not completed for all entries of the entity group information 1400, the structuring processing unit 120 returns the processing to step S1401. When the processing is completed for all entries of the entity group information 1400, the structuring processing unit 120 ends the main entity determination processing.

FIG. 22 is a flowchart showing an example of the parallelism determination processing executed by the structuring processing device 100 according to Embodiment 1.

The structuring processing unit 120 generates a pair of entity groups (step S1501). For example, there is a method for generating a pair of entity groups in which positions of main entities of the entity groups are close to each other. The invention is not limited to the method for generating a pair of entity groups.

The structuring processing unit 120 selects a pair of entity groups (step S1502).

The structuring processing unit 120 determines whether two procedures corresponding to the entity groups constituting the pair are executed in parallel based on texts, main entities of the entity groups constituting the pair, and the parallelism determination rule information 700 (step S1503). For example, the determination is executed based on a word included in a sentence connecting a main entity of one of the entity groups and a main entity of the other entity group.

When the two procedures are not executed in parallel, the structuring processing unit 120 proceeds the processing to step S1505.

When the two procedures are executed in parallel, the structuring processing unit 120 assigns a flag indicating that the procedures are executed in parallel to the pair (step S1504), and then proceeds the processing to step S1505.

In step S1505, the structuring processing unit 120 determines whether the processing is completed for all pairs of entity groups (step S1505).

When the processing is not completed for all pairs of entity groups, the structuring processing unit 120 returns the processing to step S1502.

When the processing is completed for all pairs of entity groups, the structuring processing unit 120 generates an entity family based on information about the pair to which the flag is assigned (step S1506). Specifically, the structuring processing unit 120 generates an entity family by merging pairs including the same entity group.

The structuring processing unit 120 generates information related to the entity family as the parallelism information 1500 (step S1507), and stores the generated information in the processing database 150.

FIG. 23 is a flowchart showing an example of the procedure order determination processing executed by the structuring processing device 100 according to Embodiment 1.

The structuring processing unit 120 determines an order of each procedure based on the business process order determination rule information 800 (step S1601), and generates the procedure order information 1600 based on a processing result (step S1602). Specifically, the structuring processing unit 120 determines a rough procedure order based on the business process order determination rule information 800. The structuring processing unit 120 determines the order of each procedure based on positions of main entities included in the entity groups.

The structuring processing unit 120 generates a pair of entity groups (step S1603). For example, there is a method for generating a pair of entity groups in which positions of main entities of the entity groups are close to each other. The invention is not limited to the method for generating a pair of entity groups.

The structuring processing unit 120 selects a pair of entity groups (step S1604).

The structuring processing unit 120 refers to the procedure order determination rule information 900 and the relationship definition information 1000 to determine whether there is a rule matching the pair of entity groups (step S1605).

When there is no rule matching the pair of entity groups, the structuring processing unit 120 proceeds the processing to step S1607.

When there is a rule matching the pair of entity groups, the structuring processing unit 120 determines an order between procedures corresponding to two entity groups constituting the pair based on the order 902 in an entry corresponding to the rule (step S1606), and then proceeds the processing to step S1607.

In step S1607, it is determined whether the processing is completed for all pairs of entity groups (step S1607).

When the processing is not completed for all pairs of entity groups, the structuring processing unit 120 returns the processing to step S1604.

When the processing is completed for all pairs of entity groups, the structuring processing unit 120 determines an order of procedures based on a determination result of the pairs of entity groups (step S1608).

The structuring processing unit 120 updates the procedure order information 1600 based on a processing result in step S1608 (step S1609).

The structuring processing device 100 may not store the business process order determination rule information 800. In this case, since a procedure order determination using the business process order determination rule information 800 is not executed, the procedure category determination processing can be omitted. The structuring processing device 100 may determine a procedure order based on the procedure order determination rule information 900 and the relationship definition information 1000.

As described above, the structuring processing device 100 according to Embodiment 1 can accurately generate structured data from a document in which a business process is described. Since a rule for determining a procedure order is simply a rule based on a relationship between main entities and a rule based on a procedure order and a relationship between procedure categories, costs required for setting a rule can be reduced.

A procedure category and a main entity may be determined without using a rule. For example, there may be a determination method using a model generated by learning processing.

A procedure order may be determined without using a rule. For example, there may be a determination method using a model generated by learning processing in which a word between main entities is used and a model generated by learning processing using data indicating a procedure order and a relationship between procedure categories. Further, there may be a determination method using a combination of a rule and a model.

A rule using a sub-entity may be set.

The invention is not limited to the embodiments described above, and includes various modifications. For example, the embodiments described above are described in detail to facilitate understanding of the invention, and the invention is not necessarily limited to those including all the described configurations. A part of a configuration in each embodiment may be added to, deleted from, or replaced with another configuration.

A part or all of the configurations, functions, processing units, processing methods, and the like described above may be implemented by hardware by, for example, designing with an integrated circuit. The invention can also be implemented by a program code of software for implementing functions of the embodiments. In this case, a storage medium storing the program code is provided to a computer, and a processor provided in the computer reads the program code stored in the storage medium. In this case, the program code read from the storage medium implements the functions of the embodiments described above, and the program code and the storage medium storing the program code configure the invention. Examples of the storage medium for providing such a program code include a flexible disk, a CD-ROM, a DVD-ROM, a hard disk, a solid state drive (SSD), an optical disk, a magneto-optical disk, a CD-R, a magnetic tape, a nonvolatile memory card, and a ROM.

Further, the program code for implementing the functions described in the embodiments can be implemented in a wide range of programs or script languages such as assembler, C/C++, Perl, Shell, PHP, Python, and Java.

Further, the program code of software for implementing the functions of the embodiments may be distributed via a network to be stored in a storage unit such as a hard disk or a memory of a computer or a storage medium such as a CD-RW or a CD-R, and a processor provided in the computer may read and execute the program code stored in the storage unit or the storage medium.

Control lines and information lines considered to be necessary for description are illustrated in the embodiments described above, and not all control lines and information lines in a product are necessarily shown. All components may be connected to one another.

## Claims

1. A computer system comprising:
at least one computer, wherein
an input of a document that describes a business process including a plurality of procedures is received,
an expression related to the business process is extracted from the document as an entity,
a category of the entity is classified,
a plurality of entity groups each including one or more of the entities and corresponding to one of the procedures are generated,
for each of the entity groups, a main entity that is the entity, which characterizes the procedure corresponding to the entity group, is specified based on a category of one or more of the entities included in the entity group,
first order determination processing of determining an order of the plurality of procedures based on a relationship between the main entities is executed,
an order of the plurality of procedures is determined based on a result of the first order determination processing, and
information related to the ordered entity groups is generated and outputted as structured data of the business process.

2. The computer system according to claim 1, wherein
parallelism determination processing of specifying the procedures to be executed in parallel based on a relationship between the main entities is executed, and
an order of the plurality of procedures is determined based on the result of the first order determination processing and a result of the parallelism determination processing.

3. The computer system according to claim 2, wherein
in the first order determination processing, an order between two of the procedures is determined based on at least one of a character string included in a sentence connecting the main entities and similarity between the main entities, and
in the parallelism determination processing, the procedures to be executed in parallel are specified based on the character string included in the sentence connecting the main entities.

4. The computer system according to claim 3, wherein
the computer system stores
information for managing a rule for determining an order between two of the procedures based on at least one of a character string included in a sentence connecting the entities and similarity between the entities, and
information for managing a rule for determining whether procedures are to be executed in parallel based on the character string included in the sentence connecting the main entities.

5. The computer system according to claim 1, wherein
for each of the entity groups, a category of the procedure corresponding to the entity group is classified based on a category of one or more of the entities included in the entity group,
second order determination processing of determining an order of the plurality of procedures based on an order of the procedures and a relationship between categories of the procedures is executed, and
an order of the plurality of procedures is determined based on the first order determination processing and the second order determination processing.

6. The computer system according to claim 5, wherein
the computer system stores information for managing a rule that defines an appearance order of the categories of the procedures in the business process.

7. A method for generating structured data representing a business process including a plurality of procedures, which is executed by a computer system including at least one computer, the method comprising:
a first step of receiving, by the at least one computer, an input of a document in which the business process is described;
a second step of extracting as an entity, by the at least one computer, an expression related to the business process from the document;
a third step of classifying, by the at least one computer, a category of the entity;
a fourth step of generating, by the at least one computer, a plurality of entity groups each including one or more of the entities and corresponding to one of the procedures;
a fifth step of specifying for each of the entity groups, by the at least one computer, a main entity that is the entity, which characterizes the procedure corresponding to the entity group based on a category of one or more of the entities included in the entity group;
a sixth step of executing, by the at least one computer, first order determination processing of determining an order of the plurality of procedures based on a relationship between the main entities;
a seventh step of determining, by the at least one computer, an order of the plurality of procedures based on a result of the first order determination processing; and
an eighth step of generating and outputting, by the at least one computer, information related to the ordered entity groups as structured data of the business process.

8. The method for generating structured data representing a business process according to claim 7, further comprising:
a ninth step of executing, by the at least one computer, parallelism determination processing of specifying the procedures to be executed in parallel based on a relationship between the main entities, wherein
the seventh step includes a step of determining, by the at least one computer, an order of the plurality of procedures based on the result of the first order determination processing and a result of the parallelism determination processing.

9. The method for generating structured data representing a business process according to claim 8, wherein
in the first order determination processing, an order between two of the procedures is determined based on at least one of a character string included in a sentence connecting the main entities and similarity between the main entities, and
in the parallelism determination processing, the procedures to be executed in parallel are specified based on the character string included in the sentence connecting the main entities.

10. The method for generating structured data representing a business process according to claim 9, wherein
the computer system stores
information for managing a rule for determining an order between two of the procedures based on at least one of a character string included in a sentence connecting the entities and similarity between the entities, and
information for managing a rule for determining whether procedures are to be executed in parallel based on the character string included in the sentence connecting the main entities.

11. The method for generating structured data representing a business process according to claim 7, further comprising:
a tenth step of classifying for each of the entity groups, by the at least one computer, a category of the procedure corresponding to the entity group based on a category of one or more of the entities included in the entity group; and
an eleventh step of executing, by the at least one computer, second order determination processing of determining an order of the plurality of procedures based on an order of the procedures and a relationship between categories of the procedures, wherein
the seventh step includes a step of determining, by the at least one computer, an order of the plurality of the procedures based on the first order determination processing and the second order determination processing.

12. The method for generating structured data representing a business process according to claim 11, wherein
the computer system stores information for managing a rule that defines an appearance order of the categories of the procedures in the business process.
